# EUROPEAN PATENT APPLICATION

(11) **EP 4 406 727 A1**
(43) Date of publication of application: **31.07.2024**
(21) Application number: 21969458.5
(22) Date of filing: 29.12.2021
(51) Int. Cl.: B29C 64/264, B29C 35/08, B29C 64/20, B29C 64/307, B33Y 30/00, B33Y 40/20

(54) **3D PRINTING AND CURING DEVICE**

(71) Applicant: Zhejiang Xunshi Technology Co., Ltd., Shaoxing, Zhejiang 312080 (CN)
(72) Inventor: WANG, Xingjie, Shaoxing, Zhejiang 312080 (CN); FENG, Qikai, Shaoxing, Zhejiang 312080 (CN); GAO, Lusheng, Shaoxing, Zhejiang 312080 (CN); CHEN, Ming, Shaoxing, Zhejiang 312080 (CN); ZHANG, Jing, Shaoxing, Zhejiang 312080 (CN); JIN, Liang, Shaoxing, Zhejiang 312080 (CN)
(74) Representative: Inchingalo, Simona
(86) International application number: PCT/CN2021/142613
(87) International publication number: WO 2023/123090

(57) **Abstract**

The present invention provides a 3D printing and curing device. The 3D printing and curing device includes: a box body (300) having an accommodating cavity (310); a bearing plate (110) arranged in the accommodating cavity (310) and used for bearing an element to be cured; and a light source structure arranged in the accommodating cavity (310), a light-emitting end of the light source structure facing the bearing plate (110), and the light source structure being movably arranged so that the light-emitting end of the light source structure is able to illuminate different positions of the bearing plate (110). The 3D printing and curing device of the present invention solves the problem of non-uniform curing effect of the 3D printing and curing device in the prior art.

## Description

### Technical Field

The present invention relates to the field of 3D printing, specifically to a 3D printing and curing device.

### Background

Three dimensional (3D) rapid prototyping, also known as additive manufacturing, is based on a principle of producing a 3D object by printing or laying continuous material layers. A 3D rapid prototyping device or a 3D printer works by converting a 3D computer model of an object and producing a series of cross-sectional slices, then, each slice is printed, and one slice is located at a top of another slice to produce a final 3D object. Main types of methods for 3D rapid prototyping include: 3D planographic printing or photocuring laminated object manufacturing, selective laser melting, and fused deposition modeling.

Because all the existing 3D printers have a curing process, after the curing is completed, a part of resin raw material will remain on surfaces of products; and subsequently, after manual cleaning, secondary curing is usually performed by photocuring or high temperature curing by heating. However, the existing 3D printers have the following defects:
A post-curing device (that is, a secondary curing device) adopts a fixed curing manner or a rotary curing manner, wherein the rotary curing has characteristics that a light source is fixed, a rotary disk is designed at a bottom of the light source, and a model will rotate with the rotary disk in a curing process. The rotary curing has disadvantages that a curing effect is inconsistent due to non-uniform light intensity distribution in a radial direction, and the bottom cannot be illuminated by light intensity. The fixed curing has characteristics that a light source is fixed, a space for placing a model is also fixed, and the model is in a stationary state in the curing process. According to this solution, in the curing process, the light intensity distribution is non-uniform, and the curing effects in different positions have great differences.

Troughs for curing of the post-curing device are all fixed; before curing, models need to be manually placed into the troughs one by one; and after curing, the models still need to be manually taken out from the troughs one by one, thus greatly wasting the operating time before and after curing.

When a box body works, because the post-curing device is in a closed state and the light source for curing is higher in light intensity, longer in working time and difficult in heat dissipation, a service life is shortened. Therefore, some prior arts often adopt lower light intensity, resulting in lower curing efficiency.

### Summary

A main objective of the present invention is to provide a 3D printing and curing device to solve the problem of non-uniform curing effect of the 3D printing and curing device in the prior art.

In order to achieve the above objective, the present invention provides a 3D printing and curing device, comprising: a box body having an accommodating cavity; a bearing plate arranged in the accommodating cavity and used for bearing an element to be cured; and a light source structure arranged in the accommodating cavity, a light-emitting end of the light source structure facing the bearing plate, and the light source structure being movably arranged so that the light-emitting end of the light source structure is able to illuminate different positions of the bearing plate.

In some embodiments, the 3D printing and curing device has at least two curing regions; the light source structure is movably arranged between the at least two curing regions; and the light source structure is able to move back and forth along a linear direction in each of the curing regions.

In some embodiments, the bearing plate is made of a transparent material; the bearing plate has a first end surface and a second end surface arranged opposite to each other, and the first end surface is used for bearing the element to be cured; the light source structure comprises: a first light source, a light-emitting end of the first light source facing the first end surface; a second light source, a light-emitting end of the second light source facing the second end surface; and a light source mounting element, both the first light source and the second light source being mounted on the light source mounting element, wherein the light source mounting element is movably arranged so that the light-emitting end of the first light source and the light-emitting end of the second light source are able to illuminate different positions of the bearing plate.

In some embodiments, the 3D printing and curing device further comprises: a driving element connected with the light source structure to drive the light source structure to move.

In some embodiments, the 3D printing and curing device further comprises: a transmission component, the driving element being connected with the light source structure through the transmission component so that the light source structure is able to move under an action of the transmission component and the driving element.

In some embodiments, a light intensity of the first light source is greater than or equal to 200 mW/cm²; or, a light intensity of the second light source 130 is greater than or equal to 200 mW/cm²; or, a light intensity of the first light source is greater than or equal to 200 mW/cm², and a light intensity of the second light source is greater than or equal to 200 mW/cm².

In some embodiments, a power of the first light source is adjustable; or, a power of the second light source is adjustable; or, a power of the first light source is adjustable, and a power of the second light source is adjustable.

In some embodiments, the 3D printing and curing device further comprises: a loading mechanism, comprising a bracket and a tray component, wherein the tray component comprises the bearing plate, the bearing plate is located at a bottom of the tray component, and the tray component is detachably connected with the bracket; and the bracket is connected with the box body and is movably arranged relative to the box body so that the bracket and the tray component are able to enter the accommodating cavity or be pulled out from the accommodating cavity.

In some embodiments, the tray component is clamped with the bracket.

In some embodiments, the bracket comprises two support plates, and the two support plates are arranged on two opposite sides of at least a portion of the tray component; a top of each of the support plates is provided with a slot; and the tray component comprises two gripping parts, the two gripping parts and two slots are arranged in a manner of one-to-one correspondence, and each of the gripping parts is clamped in a corresponding slot.

In some embodiments, a slot wall of a first end of the slot is provided with a stop part, the stop part and a bottom of the slot are arranged at an interval, and a first end of the gripping part is inserted between the stop part and the slot.

In some embodiments, a slot wall of a second end of the slot comprises a guide surface, a first end of the guide surface extends to a notch of the slot, and a second end of the guide surface extends towards the bottom of the slot; and the first end of the guide surface extends towards a direction away from the stop part relative to the second end of the guide surface.

In some embodiments, the tray component is provided with a first fastening hole, the bracket is provided with a second fastening hole, and the tray component is connected with the bracket through a fastener inserted into the first fastening hole and the second fastening hole.

In some embodiments, the tray component comprises a tray frame, the tray frame is arranged around the bearing plate, and the tray frame is detachably connected with the bracket; and the tray frame is provided with a gripping part.

In some embodiments, the tray component further comprises a heat insulation element, and the heat insulation element is arranged on the gripping part to cover at least a part of the gripping part.

In some embodiments, the gripping part is a platy structure, the platy structure has a connecting end and a free end arranged sequentially along an extension direction of the platy structure, the connecting end is connected with the tray frame, and the free end extends towards a direction away from the tray frame; a top end surface of the platy structure is provided with a heat insulation element; or, a bottom end surface of the platy structure is provided with a heat insulation element; or, both a top end surface of the platy structure and a bottom end surface of the platy structure are provided with heat insulation elements.

In some embodiments, the box body is provided with a box body opening in communication with the accommodating cavity; the loading mechanism further comprises: a door panel connected with the bracket and used for opening or closing the box body opening; when the door panel closes the box body opening, the bracket and the tray component are pushed into the box body; and when the door panel opens the box body opening, the bracket and the tray component are pulled out from the box body.

In some embodiments, the light source mounting element comprises a mounting part, the mounting part is provided with a heat dissipation channel, a first opening, a second opening and a third opening, the first opening, the second opening and the third opening are all in communication with the heat dissipation channel, and the first light source or the second light source is mounted at the third opening; the 3D printing and curing device further comprises: a first heat dissipation element arranged in the heat dissipation channel and located between the first opening and the second opening; and a first heat dissipation fan arranged at the first opening, or arranged in the heat dissipation channel and located between the first opening and the first heat dissipation element.

In some embodiments, the 3D printing and curing device further comprises: a heat dissipation cover body mounted at the second opening; and the heat dissipation cover body is provided with at least one vent hole.

In some embodiments, the first heat dissipation element comprises a heat dissipation plate and a plurality of heat dissipation fins connected with the heat dissipation plate, the heat dissipation plate has a first heat dissipation end surface and a second heat dissipation end surface arranged opposite to each other, the first heat dissipation end surface is arranged opposite to the first light source or the second light source, and the plurality of heat dissipation fins are arranged on the second heat dissipation end surface at intervals.

In some embodiments, the 3D printing and curing device further comprises: a second heat dissipation fan arranged on the box body, the accommodating cavity being in communication with an external environment through the second heat dissipation fan.

In some embodiments, the box body comprises a shell and an inner cavity arranged in the shell, and the inner cavity has the accommodating cavity; and the 3D printing and curing device further comprises: a heat insulation layer arranged between the shell and the inner cavity.

The 3D printing and curing device of the present invention comprises the box body, the bearing plate and the light source structure, and both the bearing plate and the light source structure are arranged in the accommodating cavity of the box body. The light source structure of the 3D printing and curing device is movably arranged so that the light-emitting end of the light source structure is able to illuminate different positions of the bearing plate. Furthermore, the light source structure linearly moves back and forth with the transmission component and the driving element so as to integrally increase the uniformity of the light intensity and the illumination area, thus improving the curing effect, increasing the printing efficiency, and solving a problem of non-uniform curing effect of the 3D printing and curing device in the prior art.

### Brief Description of the Drawings

The accompanying drawings of the specification that constitute a portion of the present invention are used to provide a further understanding of the present invention. The exemplary embodiments of the present invention and the descriptions thereof are used to explain the present invention, and do not constitute an improper limitation on the present invention. In the accompanying drawings:
Fig. 1 shows an exploded view from one perspective of an embodiment of a 3D printing and curing device according to the present invention;
Fig. 2 shows an exploded view from another perspective of an embodiment of a 3D printing and curing device according to the present invention;
Fig. 3 shows an axonometric view of a portion of the structure of a 3D printing and curing device according to the present invention;
Fig. 4 shows an exploded view of a portion of the structure of the 3D printing and curing device in Fig. 3;
Fig. 5 shows an exploded view of a light source structure and a light source mounting element of a 3D printing and curing device according to the present invention;
Fig. 6 shows a schematic structural view of a shell bottom plate and parts arranged in a shell accommodating cavity of a 3D printing and curing device according to the present invention;
Fig. 7 shows an exploded view of a portion of the structure of a box body of a 3D printing and curing device according to the present invention;
Fig. 8 shows an exploded view of a loading mechanism and a door frame of a 3D printing and curing device according to the present invention;
Fig. 9 shows an axonometric view of a loading mechanism of a 3D printing and curing device according to the present invention;
Fig. 10 shows a schematic view of a bracket of a loading mechanism of a 3D printing and curing device according to the present invention;
Fig. 11 shows an exploded view of a portion of the structure of a box body of a 3D printing and curing device according to the present invention;
Fig. 12 shows an axonometric view from one perspective of an embodiment of a 3D printing and curing device according to the present invention;
Fig. 13 shows an axonometric view from another perspective of an embodiment of a 3D printing and curing device according to the present invention;
Fig. 14 shows a schematic view of a limiting block of a 3D printing and curing device according to the present invention;
Fig. 15 shows an axonometric view of a light source structure and a light source mounting element of a 3D printing and curing device according to the present invention;
Fig. 16 shows an exploded view from one perspective of a portion of the structure in Fig. 15; and
Fig. 17 shows an exploded view from another perspective of a portion of the structure in Fig. 15.

The above accompanying drawings have the following reference numerals:
110. bearing plate; 120. first light source; 130. second light source; 140. light source mounting element; 143. connecting part; 144. avoiding space; 150. driving element; 160. transmission component; 161. transmission screw; 162. nut; 170. guide rail; 180. slide block; 190. first connecting element;
210. bracket; 211. support plate; 212. slot; 213. stop part; 214. guide surface; 220. tray component; 221. tray frame; 222. gripping part; 223. heat insulation element; 230. sliding part; 240. door panel; 250. handle;
300. box body; 310. accommodating cavity; 320. box body opening; 330. slide rail; 340. fourth opening;
410. mounting part; 420. heat dissipation channel; 421. first opening; 422. second opening; 423. third opening; 430. first heat dissipation element; 431. heat dissipation plate; 432. heat dissipation fin; 440. first heat dissipation fan; 450. heat dissipation cover body; 451. vent hole; 460. second heat dissipation fan; 470. air duct;
510. first mounting seat; 520. second mounting seat; 530. limiting block;
350. shell; 351. shell upper plate; 352. shell bottom plate; 353. shell back plate; 360. inner cavity; 361. inner cavity upper plate; 362. inner cavity bottom plate; 363. inner cavity back plate; 370. heat insulation layer; 371. first heat insulation layer; 372. second heat insulation layer; 373. third heat insulation layer;
610. first power source; 620. second power source; 630. door frame; 640. anti-collision pad; 650. support element; 660. shell accommodating cavity.

### Detailed Description of the Embodiments

It should be noted that in the case of no conflict, the embodiments in the present invention and the features in the embodiments may be combined with each other. The present invention will be described in detail below with reference to the accompanying drawings in conjunction with the embodiments.

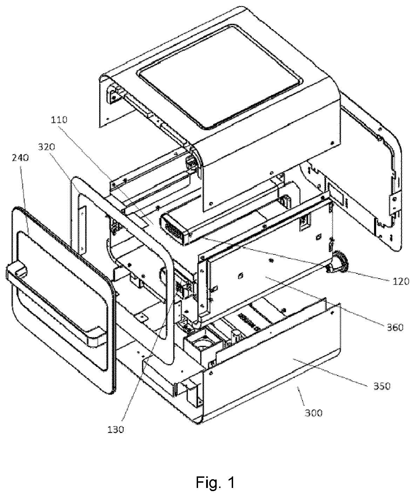

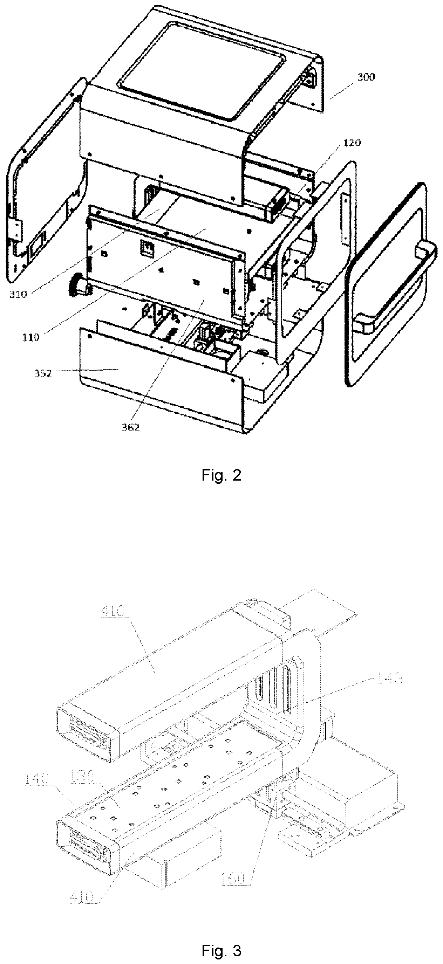

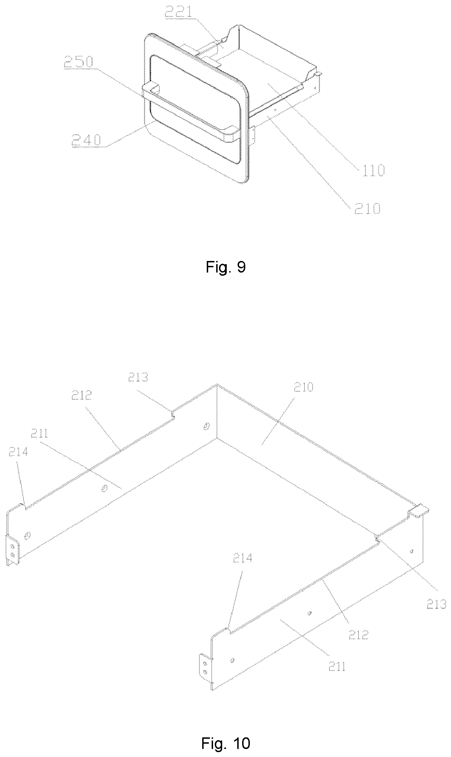

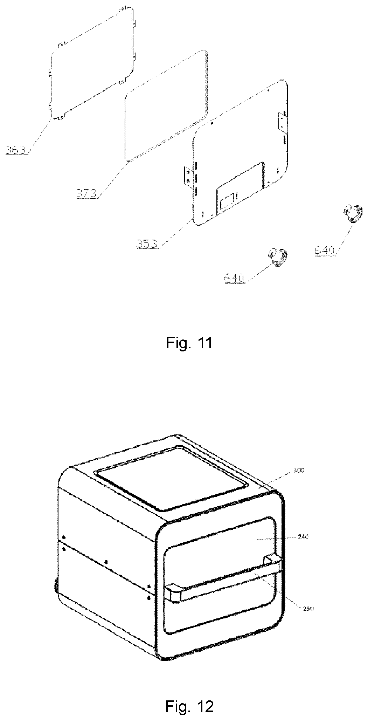

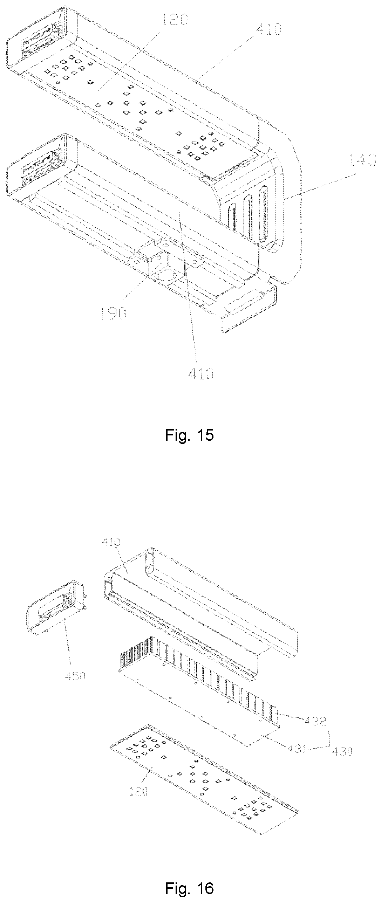

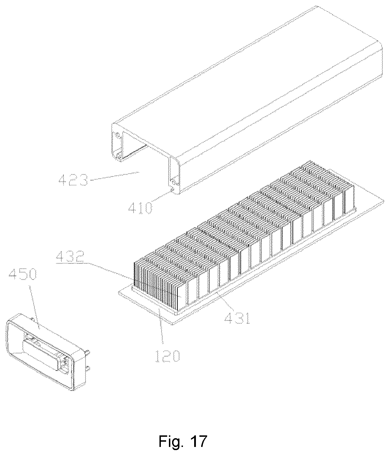

Referring to Fig. 1 to Fig. 17, the present invention provides a 3D printing and curing device, comprising: a box body 300 having an accommodating cavity 310; a bearing plate 110 arranged in the accommodating cavity 310 and used for bearing an element to be cured; and a light source structure arranged in the accommodating cavity 310, a light-emitting end of the light source structure facing the bearing plate 110, and the light source structure being movably arranged so that the light-emitting end of the light source structure is able to illuminate different positions of the bearing plate 110.

The 3D printing and curing device of the present invention includes the box body 300, the bearing plate 110 and the light source structure, and both the bearing plate 110 and the light source structure are arranged in the accommodating cavity 310 of the box body 300. The light source structure of the 3D printing and curing device is movably arranged, so that the light-emitting end of the light source structure is able to illuminate different positions of the bearing plate 110 to ensure uniform light intensity distribution, so as to solve a problem of non-uniform curing effect of the 3D printing and curing device in the prior art and improve the curing effect.

In this embodiment, the 3D printing and curing device has at least two curing regions, the bearing plate 110 has at least two bearing plate segments, the at least two bearing plate segments and the at least two curing regions are arranged in a manner of one-to-one correspondence, and each of the bearing plate segments is located in a corresponding curing region; the light source structure is movably arranged between the at least two curing regions; and the light source structure is able to move back and forth along a linear direction in each of the curing regions.

During a specific implementation, due to an arrangement of a plurality of curing regions (including a case of two curing regions), in a curing process, targeted curing operations are able to be performed according to a number and placement positions of elements to be cured. When there are fewer elements to be cured (scanned), the light source structure only performs scanning back and forth in the curing regions where the elements to be cured are placed, thus being conducive to further increasing a curing efficiency and reducing an energy loss.

In this embodiment, the bearing plate 110 is made of a transparent material, the bearing plate 110 has a first end surface and a second end surface arranged opposite to each other, and the first end surface is used for bearing the element to be cured; the light source structure includes: a first light source 120, a light-emitting end of the first light source 120 facing the first end surface; a second light source 130, a light-emitting end of the second light source 130 facing the second end surface; and a light source mounting element 140, both the first light source 120 and the second light source 130 being mounted on the light source mounting element 140, wherein the light source mounting element 140 is movably arranged so that the light-emitting end of the first light source 120 and the light-emitting end of the second light source 130 are able to illuminate different positions of the bearing plate 110.

During a specific implementation, because the bearing plate 110 is made of the transparent material, the light is able to pass through the bearing plate to illuminate the element to be cured. The second light source 130 and the first light source 120 are arranged on two opposite sides of the bearing plate 110, the light-emitting end of the first light source 120 faces the first end surface to illuminate a top surface of the element to be cured, and the light-emitting end of the second light source 130 faces the second end surface to illuminate a bottom surface of the element to be cured. Two sides of the element to be cured are able to be illuminated to increase the uniformity of the light intensity, thus improving the curing effect and solving the problem of non-uniform curing effect of the 3D printing and curing device in the prior art.

In some embodiments, the first light source 120 and the second light source 130 are UV lamps, wherein UV is an abbreviation for ultraviolet, and the UV lamp refers to an ultraviolet lamp. Photochemical reactions, product curing, sterilization and disinfection, and the like are performed according to ultraviolet properties.

In some embodiments, the bearing plate 110 is a flat plate structure, the first end surface is a first plane, the second end surface is a second plane, and the first plane is parallel to the second plane. This arrangement facilitates a support of the element to be cured and ensures the uniformity of the light intensity.

In some embodiments, the first end surface is located above the second end surface, the first light source 120 is located above the bearing plate 110, and the second light source 130 is located below the bearing plate 110.

In some embodiments, a size of the bearing plate 110 is 247.5 mm×234 mm. The bearing plate 110 may be made of transparent glass, PMMA or the like, and a light transmittance of the bearing plate 110 may be 90% or higher, wherein the PMMA is an abbreviation for polymethyl methacrylate. The PMMA is a high molecular polymer, is also known as acrylic or organic glass, has advantages of high transparency, low cost, easy mechanical processing and the like, and is a commonly used glass substitute material.

In this embodiment, the 3D printing and curing device further includes: a driving element 150 connected with the light source structure to drive the light source structure to move, wherein the driving element 150 drives the light source structure to linearly move back and forth. Due to this arrangement, the element to be cured is able to be illuminated by the light source in all angles. The first light source 120 and the second light source 130 are able to move back and forth to achieve scanning curing to uniformly illuminate the element to be cured, thus increasing the curing uniformity, solving the problem of non-uniform curing effect of the 3D printing and curing device in the prior art, and also increasing the curing efficiency.

In this embodiment, the 3D printing and curing device further includes a controller and at least two detection elements, and each of the at least two detection elements and the driving element 150 are in communication with the controller; the at least two detection elements and the at least two curing regions are arranged in a manner of one-to-one correspondence, and a detection head of each of the at least two detection elements faces the corresponding curing region to detect whether there is the element to be cured in the corresponding curing region and send a detection information to the controller; and the controller controls the driving element 150 to operate according to the detection information so that the first light source 120 and the second light source 130 move into a curing region storing the element to be cured to perform a curing operation.

In this embodiment, the 3D printing and curing device further includes: a transmission component 160, the driving element 150 being connected with the light source structure through the transmission component 160 so that the light source structure is able to move under an action of the transmission component 160 and the driving element 150, wherein the light source mounting element 140 linearly moves back and forth under the action of the transmission component 160 and the driving element 150.

In some embodiments, the transmission component 160 includes a transmission screw 161 and a nut 162 sleeving the transmission screw 161, wherein the driving element 150 is connected with the transmission screw 161 so that the nut 162 is able to move along an extension direction of the transmission screw 161 through a rotation of the transmission screw 161; the nut 162 is connected with the light source mounting element 140; the nut 162 is a copper nut; and the driving element 150 drives the transmission screw 161 to rotate so that the nut 162 linearly moves back and forth.

In some embodiments, the driving element 150 is a motor, and the motor is connected with the transmission screw 161. Through a forward and reverse rotation of the motor, the nut 162 and the light source mounting element 140 are able to move back and forth, thus performing scanning curing.

In other embodiments, the driving element 150 is a motor, and the transmission component 160 may also be a worm gear structure.

In other embodiments, the transmission component 160 may be omitted, and the driving element 150 is a linear motor.

In some embodiments, the 3D printing and curing device further includes a first connecting element 190, and the transmission component 160 is connected with the light source mounting element 140 through the first connecting element 190, wherein the first connecting element 190 is connected with the nut 162 of the transmission component 160. This arrangement facilitates the connection between the transmission component 160 and the light source mounting element 140.

In some embodiments, the 3D printing and curing device further includes a guide rail 170 and a slide block 180, wherein the slide block 180 is connected with the guide rail 170 and is slidably arranged along an extension direction of the guide rail 170; and the slide block 180 is connected with the light source mounting element 140. This arrangement plays roles in supporting and guiding the light source mounting element 140.

In some embodiments, the slide block 180 is connected with the nut 162, the slide block 180 is connected with the light source mounting element 140 through the nut 162 and the first connecting element 190, and the slide block 180 is able to slide along the guide rail 170 to play roles in supporting and guiding the nut 162.

In some embodiments, the 3D printing and curing device further includes a first mounting seat 510, and the driving element 150 is mounted on the first mounting seat 510. This arrangement facilitates a mounting of the driving element 150.

In some embodiments, the first mounting seat 510 further plays roles in mounting and fixing the guide rail 170, wherein the driving element 150 is mounted on a vertical plate of the first mounting seat 510, and the guide rail 170 is mounted on a horizontal plate of the first mounting seat 510.

In some embodiments, the 3D printing and curing device further includes a second mounting seat 520, the second mounting seat 520 and the first mounting seat 510 are arranged at an interval, and the guide rail 170 is mounted on the second mounting seat 520.

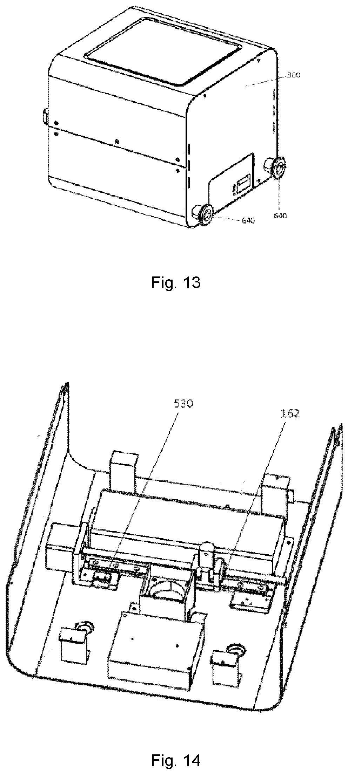

In some embodiments, as shown in Fig. 14, the 3D printing and curing device further includes a limiting block 530, the limiting block 530 is arranged on the first mounting seat 510, and the limiting block 530 is used for stopping the nut 162 to stop the nut 162 at a limit position, so as to prevent the nut 162 from colliding with the driving element 150 or the vertical plate of the first mounting seat 510.

In this embodiment, a light intensity of the first light source 120 is greater than or equal to 200 mW/cm²; or, a light intensity of the second light source 130 is greater than or equal to 200 mW/cm²; or, a light intensity of the first light source 120 is greater than or equal to 200 mW/cm², and a light intensity of the second light source 130 is greater than or equal to 200 mW/cm². During a specific implementation, the light intensity of the first light source 120 and the light intensity of the second light source 130 during scanning are greater than or equal to 200 mW/cm². Compared with 3500 µW/cm² to 4500 µW/cm² in the prior art, the light intensity is increased by hundreds of times. Under this high light intensity, the element to be cured is able to be quickly cured, so that the curing efficiency is greatly increased (about 8 times, depending on different resin materials). In addition, for materials, high light intensity is able to be applied to more materials, and the application range of materials is wide. It should be noted that the light intensity refers to light power per unit area.

In this embodiment, a power of the first light source 120 is adjustable; or, a power of the second light source 130 is adjustable; or, a power of the first light source 120 is adjustable, and a power of the second light source 130 is adjustable. This arrangement increases an applicability of the 3D printing and curing device.

In some embodiments, the first light source 120 includes a first lamp panel and a plurality of first lamp beads arranged on the first lamp panel.

In some embodiments, the second light source 130 includes a second lamp panel and a plurality of second lamp beads arranged on the second lamp panel.

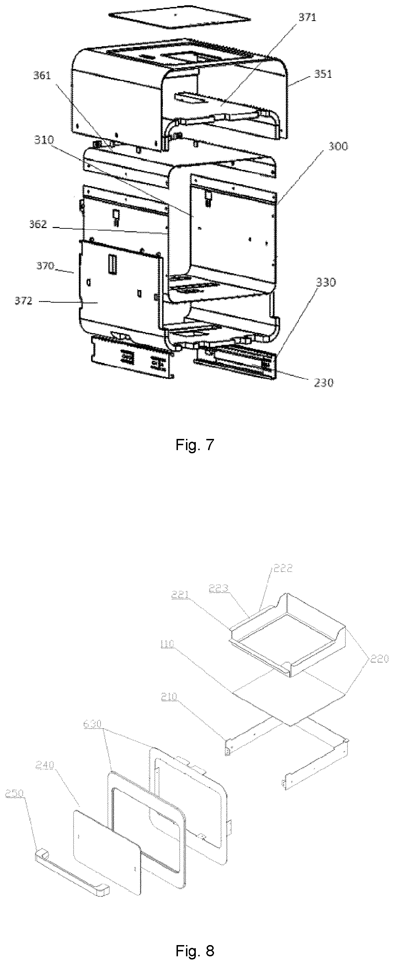

In this embodiment, as shown in Fig. 8 to Fig. 10, the 3D printing and curing device further includes: a loading mechanism, comprising a bracket 210 and a tray component 220, wherein the tray component 220 includes the bearing plate 110, the bearing plate 110 is located at a bottom of the tray component 220, and the tray component 220 is detachably connected with the bracket 210; and the bracket 210 is connected with the box body 300 and is movably arranged relative to the box body 300 so that the bracket 210 and the tray component 220 are able to enter the accommodating cavity 310 or be pulled out from the accommodating cavity 310. Due to a detachability of the tray component 220, the element to be cured is able to be placed in another tray component 220 in advance, and the tray component 220 is able to be directly replaced to save the material picking and placing time. That is, before curing, the element to be cured is able to be placed on the tray component 220 first, and then, the tray component 220 is mounted on the bracket 210; and after curing, the tray component 220 is able to be dismounted from the bracket 210 first, and then, the element to be cured in the tray component 220 is taken away, thus saving an operating time before and after curing. As a result, the 3D printing and curing device is able to continuously perform the curing operation by using the operating time before and after curing, thus solving a problem of longer material picking and placing time of the loading mechanism in the prior art, and increasing a production efficiency of the 3D printing and curing device.

In some embodiments, the tray component 220 is clamped with the bracket 210. This arrangement facilitates dismounting and mounting of the tray component 220.

In some embodiments, the bracket 210 includes two support plates 211, and the two support plates 211 are arranged on two opposite sides of at least a portion of the tray component 220; a top of each of the support plates 211 is provided with a slot 212; along the arrangement direction of the two support plates 211, the slot 212 extends to two oppositely arranged end surfaces of the support plate 211; and the tray component 220 includes two gripping parts 222, the two gripping parts 222 and two slots 212 are arranged in a manner of one-to-one correspondence, and each of the gripping parts 222 is clamped in a corresponding slot 212. During a specific implementation, the gripping part 222 of the tray component 220 is placed in the corresponding slot 212 through a notch of the corresponding slot 212, and is limited through slot walls at both ends of the corresponding slot 212; and at least a part of the tray component 220 is arranged between the two support plates 211 so as to limit left and right sides of the tray component 220 through the two support plates 211.

In some embodiments, a tray frame 221 is arranged between the two support plates 211.

In some embodiments, a slot wall of a first end of the slot 212 is provided with a stop part 213, the stop part 213 and a bottom of the slot 212 are arranged at an interval, and a first end of the gripping part 222 is inserted between the stop part 213 and the slot 212. Due to this arrangement, the gripping part 222 is able to be limited in a vertical direction to avoid a movement of the tray component 220 in the vertical direction.

In some embodiments, a slot wall of a second end of the slot 212 includes a guide surface 214, a first end of the guide surface 214 extends to a notch of the slot 212, and a second end of the guide surface 214 extends towards the bottom of the slot 212; and the first end of the guide surface 214 extends towards a direction away from the stop part 213 relative to the second end of the guide surface 214. Due to the arrangement of the guide surface 214, when the tray component 220 is taken out, the tray component 220 is able to be avoided, that is, the second end of the gripping part 222 is able to be avoided so as to be convenient for taking out the tray component 220.

In some embodiments, the guide surface 214 is an inclined surface or an arc surface, and the arc surface protrudes towards the first end of the slot 212.

In some embodiments, the tray component 220 is clamped with the bracket 210 through a buckle structure.

In some embodiments, the tray component 220 is provided with a first fastening hole, the bracket 210 is provided with a second fastening hole, and the tray component 220 is connected with the bracket 210 through a fastener inserted into the first fastening hole and the second fastening hole.

In some embodiments, the tray component 220 includes a tray frame 221, the tray frame 221 is arranged around the bearing plate 110, and the tray frame 221 is detachably connected with the bracket 210; and the tray frame 221 is provided with a gripping part 222. Due to this arrangement, the tray component 220 is able to be conveniently gripped when being taken out.

In some embodiments, the bearing plate 110 and the tray frame 221 are glued together or mechanically fixed.

In some embodiments, two gripping parts 222 are provided, and the two gripping parts 222 are located on two opposite sides of the tray frame 221. Due to this arrangement, the tray component 220 is able to be conveniently gripped when being taken out.

In some embodiments, the tray component 220 further includes a heat insulation element 223, and the heat insulation element 223 is arranged on the gripping part 222 to cover at least a part of the gripping part 222. The heat insulation element 223 is used for heat insulation so as to protect an operator when the tray component 220 is taken out.

In some embodiments, the heat insulation element 223 is made of a silicone material.

In some embodiments, the gripping part 222 is a platy structure, the platy structure has a connecting end and a free end arranged sequentially along an extension direction of the platy structure, the connecting end is connected with the tray frame 221, and the free end extends towards a direction away from the tray frame 221; a top end surface of the platy structure is provided with a heat insulation element 223; or, a bottom end surface of the platy structure is provided with a heat insulation element 223; or, both a top end surface of the platy structure and a bottom end surface of the platy structure are provided with heat insulation elements 223.

In some embodiments, the heat insulation element 223 has the same shape as the gripping part 222 and thus is able to cover the gripping part 222, and is arranged above and/or below the gripping part 222.

In this embodiment, the box body 300 is provided with a box body opening 320 in communication with the accommodating cavity 310; the loading mechanism further includes: a door panel 240 connected with the bracket 210 and used for opening or closing the box body opening 320; when the door panel 240 closes the box body opening 320, the bracket 210 and the tray component 220 are pushed into the box body 300; and when the door panel 240 opens the box body opening 320, the bracket 210 and the tray component 220 are pulled out from the box body 300.

In some embodiments, as shown in Fig. 7, a slide rail 330 is arranged in the accommodating cavity 310; and the bracket 210 is provided with a sliding part 230, and the sliding part 230 is connected with the slide rail 330 and is slidably arranged along the slide rail 330, so that the bracket 210 is arranged in the box body 300 in a drawable manner through the slide rail 330 and the sliding part 230. The bracket 210, the slide rail 330 and the accommodating cavity 310 form a drawer structure which is able to be pulled out and pushed back through the box body opening 320.

In some embodiments, the door panel 240 is mounted on a side close to the box body opening 320 and is connected with the bracket 210.

In some embodiments, the loading mechanism further includes: a handle 250 arranged on the door panel 240 to enable the door panel 240 and the bracket 210 to move by pulling the handle 250. Due to this arrangement, the bracket 210 is able to be conveniently pulled out or pushed back.

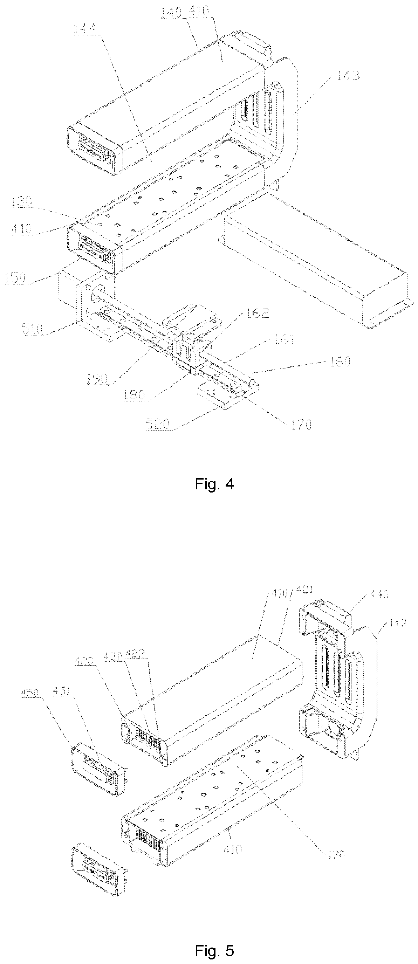

In this embodiment, as shown in Fig. 4 and Fig. 5, the light source mounting element 140 includes a mounting part 410, the mounting part 410 is provided with a heat dissipation channel 420, a first opening 421, a second opening 422 and a third opening 423, the first opening 421, the second opening 422 and the third opening 423 are all in communication with the heat dissipation channel 420, and the first light source 120 or the second light source 130 is mounted at the third opening 423; the 3D printing and curing device further includes: a first heat dissipation element 430 arranged in the heat dissipation channel 420 and located between the first opening 421 and the second opening 422; and a first heat dissipation fan 440 arranged at the first opening 421, or arranged in the heat dissipation channel 420 and located between the first opening 421 and the first heat dissipation element 430.

In some embodiments, the mounting part 410 is in a shape of a cuboid, the first opening 421 and the second opening 422 are arranged at both ends of the mounting part 410, and the third opening 423 is located in a plane perpendicular to the first opening 421 and the second opening 422.

In some embodiments, the light source mounting element 140 includes two mounting parts 410, the third openings 423 of the two mounting parts 410 are arranged opposite to each other, the first light source 120 is mounted on one of the two mounting parts 410, and the second light source 130 is mounted on the other one of the two mounting parts 410.

In some embodiments, the two mounting parts 410 are connected through a connecting part 143, an avoiding space 144 is formed between the two mounting parts 410 and the connecting part 143, and the bearing plate 110 is located in the avoiding space 144.

In some embodiments, the light source mounting element 140 is a U-shaped structure, the two mounting parts 410 are an upper linear structure and a lower linear structure of the U-shaped structure respectively, and the connecting part 143 is a curved part of the U-shaped structure, which plays a role in connecting the two mounting parts 410.

In some embodiments, the first opening 421 is arranged close to the connecting part 143 that connects the two mounting parts 410, and the first heat dissipation fan 440 is arranged at the first opening 421; the first heat dissipation fan 440 is connected with the connecting part 143; and/or the first heat dissipation fan 440 is connected with the mounting part 410.

In this embodiment, the 3D printing and curing device further includes: a heat dissipation cover body 450 mounted at the second opening 422 to seal the second opening 422, wherein the heat dissipation cover body 450 is provided with at least one vent hole 451. This arrangement is able to ensure that gas enters the heat dissipation channel 420 through the at least one vent hole 451, so as to discharge a heat of the first heat dissipation element 430 and prevent foreign matters from entering the heat dissipation channel 420.

In some embodiments, the second opening 422 is arranged at an end opposite to the first opening 421.

In some embodiments, a plurality of vent holes 451 are provided, and the plurality of vent holes 451 are arranged on the heat dissipation cover body 450 at intervals. This arrangement ensures a volume of air entering the heat dissipation channel 420 to ensure the heat dissipation effect.

In some embodiments, the first heat dissipation element 430 includes a heat dissipation plate 431 and a plurality of heat dissipation fins 432 connected with the heat dissipation plate 431, the heat dissipation plate 431 has a first heat dissipation end surface and a second heat dissipation end surface arranged opposite to each other, the first heat dissipation end surface is arranged opposite to the first light source 120 or the second light source 130, and the plurality of heat dissipation fins 432 are arranged on the second heat dissipation end surface at intervals. This arrangement ensures the heat dissipation effect on the first light source 120 and the second light source 130.

In some embodiments, the first heat dissipation element 430 includes multiple groups of heat dissipation fins, and the multiple groups of heat dissipation fins are arranged at intervals along a first preset direction; and each group of heat dissipation fins includes a plurality of heat dissipation fins 432, and the plurality of heat dissipation fins 432 in each group of heat dissipation fins are arranged at intervals along a second preset direction, wherein the first preset direction is perpendicular to the second preset direction, and both the first preset direction and the second preset direction are parallel to the heat dissipation plate 431.

In some embodiments, the first heat dissipation end surface is attached to a part of a surface of the first heat dissipation element 430. This arrangement further improves the heat dissipation effect on the first light source 120 and the second light source 130.

In some embodiments, the first heat dissipation end surface is parallel to the heat dissipation plate 431, and the plurality of heat dissipation fins 432 of the first heat dissipation element 430 are perpendicular to the first heat dissipation end surface.

In this embodiment, the 3D printing and curing device further includes: a second heat dissipation fan 460 arranged on the box body 300, the accommodating cavity 310 being in communication with an external environment through the second heat dissipation fan 460. The second heat dissipation fan 460 is able to achieve overall heat dissipation for an entire accommodating cavity 310, thus solving a problem of poor heat dissipation effect of a heat dissipation structure in the prior art.

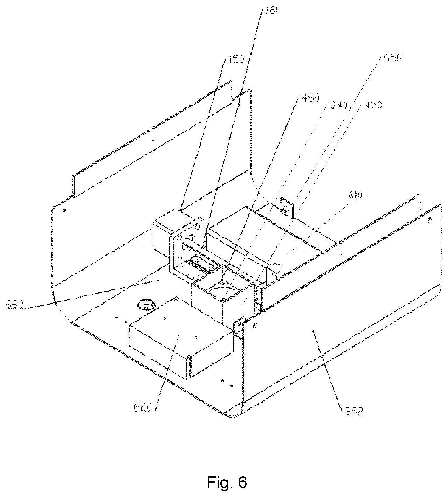

In this embodiment, as shown in Fig. 6, the box body 300 includes a shell 350 and an inner cavity 360 arranged in the shell 350, the inner cavity 360 has the accommodating cavity 310, and the inner cavity 360 is provided with a fifth opening; the shell 350 is provided with a fourth opening 340, a shell accommodating cavity 660 is formed between the shell 350 and the inner cavity 360, and the second heat dissipation fan 460 is arranged in the shell accommodating cavity 660; and the 3D printing and curing device further includes an air duct 470, the air duct 470 is located in the shell accommodating cavity 660, a first end of the air duct 470 is in communication with the fifth opening, a second end of the air duct 470 is in communication with the fourth opening 340, and the second heat dissipation fan 460 is arranged in the air duct 470. This arrangement facilitates the heat dissipation for the accommodating cavity 310 and parts in the accommodating cavity 310.

In some embodiments, the bearing plate 110, the light source mounting element 140, the light source structure, the bracket 210, the slide rail 330 and the tray component 220 are all arranged in the accommodating cavity 310, and the slide rail 330 is connected with the inner wall of the inner cavity 360; the driving element 150, the transmission component 160, the guide rail 170, the slide block 180, the first mounting seat 510 and the second mounting seat 520 are all arranged in the shell accommodating cavity 660; and the first connecting element 190 passes through the inner cavity 360 and is connected with the light source mounting element 140.

In this embodiment, the 3D printing and curing device further includes: a heat insulation layer 370 arranged between the shell 350 and the inner cavity 360. This arrangement prevents the heat in the accommodating cavity 310 from spreading to the shell 350, thus avoiding an operator from being scalded and improving the safety.

In some embodiments, the heat insulation layer 370 is made of heat insulation cotton and may also be made of other heat insulation materials.

In some embodiments, the shell 350 includes a shell upper plate 351, a shell bottom plate 352 and a shell back plate 353, the shell upper plate 351 is detachably connected with the shell bottom plate 352, the shell back plate 353 is mounted on a back of the shell upper plate 351 and the shell bottom plate 352, and the shell upper plate 351, the shell bottom plate 352 and the shell back plate 353 together enclose the shell 350; the inner cavity 360 includes an inner cavity upper plate 361, an inner cavity bottom plate 362 and an inner cavity back plate 363, the inner cavity upper plate 361 is detachably connected with the inner cavity bottom plate 362, the inner cavity back plate 363 is mounted on a back of the inner cavity upper plate 361 and the inner cavity bottom plate 362, and the inner cavity upper plate 361, the inner cavity bottom plate 362 and the inner cavity back plate 363 together enclose the inner cavity 360; and the heat insulation layer 370 includes a first heat insulation layer 371, a second heat insulation layer 372 and a third heat insulation layer 373, the first heat insulation layer 371 is arranged between the inner cavity upper plate 361 and the shell upper plate 351, the second heat insulation layer 372 is arranged between the inner cavity bottom plate 362 and the shell bottom plate 352, and the third heat insulation layer 373 is arranged between the inner cavity back plate 363 and the shell bottom plate 352. This arrangement facilitates the assembly of the box body 300.

In some embodiments, a shell accommodating cavity 660 is formed between the shell bottom plate 352 and the inner cavity bottom plate 362; and the shell bottom plate 352 is provided with a support element 650, and the inner cavity bottom plate 362 is arranged on the support element 650 to support the inner cavity bottom plate 362 through the support element 650, thus achieving the function of supporting the inner cavity 360.

In this embodiment, the 3D printing and curing device further includes a first power source 610 and a second power source 620, both the first power source 610 and the second power source 620 are arranged in the shell accommodating cavity 660, and the first power source 610 is connected with both the first light source 120 and the second light source 130 to supply power to the first light source 120 and the second light source 130; and the second power source 620 is connected with the driving element 150, the first heat dissipation fan 440 and the second heat dissipation fan 460 to supply power to the above components, thus achieving start and stop of the above components.

In this embodiment, the box body 300 further includes a door frame 630, the door frame 630 is connected with both the shell 350 and the inner cavity 360, and the door frame 630 is formed with the above box body opening 320.

In this embodiment, a plurality of anti-collision pads 640 are arranged on the back of the box body 300 to reduce an impact on the 3D printing and curing device.

The 3D printing and curing device of the present invention adopts scanning curing with high light intensity, is compatible with a loading mechanism convenient for picking and placing materials, and is ingenious in structure and reasonable in design. Compared with the prior art, the present invention has following beneficial effects: the curing effect is uniform; the curing efficiency is significantly increased; the element to be cured is able to be placed in another tray component in advance, and the tray component is able to be directly replaced to save the material picking and placing time; and the heat dissipation effect is good, and the problem of heat dissipation of light sources greater than 140 W is able to be solved, thus achieving light sources with ultra-high light intensity, and greatly increasing the curing efficiency.

The present invention further provides a 3D printing and curing method suitable for the above 3D printing and curing device. The 3D printing and curing method includes: controlling the light source structure of the 3D printing and curing device to move so that the light-emitting end of the light source structure is able to illuminate different positions of the bearing plate 110 of the 3D printing and curing device. Due to this arrangement, the element to be cured is uniformly illuminated, the curing uniformity is increased, and the problem of non-uniform curing effect of the 3D printing and curing device in the prior art is solved; and the curing efficiency is also increased.

In some embodiments, the method of controlling the light source structure of the 3D printing and curing device to move includes: controlling the light source structure to move to a curing region where the element to be cured is placed, and controlling the light source structure to linearly move back and forth in the curing region where the element to be cured is placed. This arrangement increases the curing efficiency and reduces the energy loss.

From the above description, it can be seen that the above embodiments of the present invention achieve the following technical effects:
The 3D printing and curing device of the present invention includes the box body 300, the bearing plate 110 and the light source structure, both the bearing plate 110 and the light source structure are arranged in the accommodating cavity 310 of the box body 300, and the light source structure of the 3D printing and curing device is movably arranged so that the light-emitting end of the light source structure is able to illuminate different positions of the bearing plate 110. As a result, the light intensity distribution is uniform, the problem of non-uniform curing effect of the 3D printing and curing device in the prior art is solved, and the curing effect is improved.

The above descriptions are merely some embodiments of the present invention, but are not intended to limit the present invention. For those skilled in the art, the present invention may have various modifications and variations. Any modifications, equivalent replacements, improvements, and the like made within the spirit and principle of the present invention shall be included within the protection scope of the present invention.

## Claims

1. A 3D printing and curing device, comprising:
a box body (300) having an accommodating cavity (310);
a bearing plate (110) arranged in the accommodating cavity (310) and used for bearing an element to be cured; and
a light source structure arranged in the accommodating cavity (310), a light-emitting end of the light source structure facing the bearing plate (110), and the light source structure being movably arranged, so that the light-emitting end of the light source structure is able to illuminate different positions of the bearing plate (110).

2. The 3D printing and curing device as claimed in claim 1, wherein the 3D printing and curing device has at least two curing regions;
the light source structure is movably arranged between the at least two curing regions; and the light source structure is able to move back and forth along a linear direction in each of the curing regions.

3. The 3D printing and curing device as claimed in claim 1, wherein the bearing plate (110) is made of a transparent material, the bearing plate (110) has a first end surface and a second end surface arranged opposite to each other, and the first end surface is used for bearing the element to be cured; the light source structure comprises:
a first light source (120), a light-emitting end of the first light source (120) facing the first end surface;
a second light source (130), a light-emitting end of the second light source (130) facing the second end surface; and
a light source mounting element (140), both the first light source (120) and the second light source (130) being mounted on the light source mounting element (140), wherein the light source mounting element (140) is movably arranged, so that the light-emitting end of the first light source (120) and the light-emitting end of the second light source (130) are able to illuminate different positions of the bearing plate (110).

4. The 3D printing and curing device as claimed in claim 1, wherein the 3D printing and curing device further comprises:
a driving element (150) connected with the light source structure to drive the light source structure to move.

5. The 3D printing and curing device as claimed in claim 4, wherein the 3D printing and curing device further comprises:
a transmission component (160), the driving element (150) being connected with the light source structure through the transmission component (160) so that the light source structure is able to move under an action of the transmission component (160) and the driving element (150).

6. The 3D printing and curing device as claimed in claim 3, wherein
a light intensity of the first light source (120) is greater than or equal to 200 mW/cm²; or
a light intensity of the second light source (130) is greater than or equal to 200 mW/cm²; or
a light intensity of the first light source (120) is greater than or equal to 200 mW/cm², and a light intensity of the second light source (130) is greater than or equal to 200 mW/cm².

7. The 3D printing and curing device as claimed in claim 3, wherein
a power of the first light source (120) is adjustable; or
a power of the second light source (130) is adjustable; or
a power of the first light source (120) is adjustable, and a power of the second light source (130) is adjustable.

8. The 3D printing and curing device as claimed in any one of claims 1 to 7, wherein the 3D printing and curing device further comprises:
a loading mechanism, comprising a bracket (210) and a tray component (220), wherein the tray component (220) comprises the bearing plate (110), the bearing plate (110) is located at a bottom of the tray component (220), and the tray component (220) is detachably connected with the bracket (210); and
the bracket (210) is connected with the box body (300) and is movably arranged relative to the box body (300) so that the bracket (210) and the tray component (220) are able to enter the accommodating cavity (310) or be pulled out from the accommodating cavity (310).

9. The 3D printing and curing device as claimed in claim 8, wherein the tray component (220) is clamped with the bracket (210).

10. The 3D printing and curing device as claimed in claim 8, wherein the bracket (210) comprises two support plates (211), and the two support plates (211) are arranged on two opposite sides of at least a portion of the tray component (220); a top of each of the support plates (211) is provided with a slot (212); and
the tray component (220) comprises two gripping parts (222), the two gripping parts (222) and two slots (212) are arranged in a manner of one-to-one correspondence, and each of the gripping parts (222) is clamped in a corresponding slot (212).

11. The 3D printing and curing device as claimed in claim 10, wherein a slot wall of a first end of the slot (212) is provided with a stop part (213), the stop part (213) and a bottom of the slot (212) are arranged at an interval, and a first end of the gripping part (222) is inserted between the stop part (213) and the slot (212).

12. The 3D printing and curing device as claimed in claim 11, wherein a slot wall of a second end of the slot (212) comprises a guide surface (214), a first end of the guide surface (214) extends to a notch of the slot (212), and a second end of the guide surface (214) extends towards the bottom of the slot (212); and the first end of the guide surface (214) extends towards a direction away from the stop part (213) relative to the second end of the guide surface (214).

13. The 3D printing and curing device as claimed in claim 8, wherein the tray component (220) is provided with a first fastening hole, the bracket (210) is provided with a second fastening hole, and the tray component (220) is connected with the bracket (210) through a fastener inserted into the first fastening hole and the second fastening hole.

14. The 3D printing and curing device as claimed in claim 8, wherein the tray component (220) comprises a tray frame (221), the tray frame (221) is arranged around the bearing plate (110), and the tray frame (221) is detachably connected with the bracket (210); and the tray frame (221) is provided with a gripping part (222).

15. The 3D printing and curing device as claimed in claim 14, wherein the tray component (220) further comprises a heat insulation element (223), and the heat insulation element (223) is arranged on the gripping part (222) to cover at least a part of the gripping part (222).

16. The 3D printing and curing device as claimed in claim 14, wherein the gripping part (222) is a platy structure, the platy structure has a connecting end and a free end arranged sequentially along an extension direction of the platy structure, the connecting end is connected with the tray frame (221), and the free end extends towards a direction away from the tray frame (221);
a top end surface of the platy structure is provided with a heat insulation element (223); or
a bottom end surface of the platy structure is provided with a heat insulation element (223); or
both a top end surface of the platy structure and a bottom end surface of the platy structure are provided with heat insulation elements (223).

17. The 3D printing and curing device as claimed in claim 8, wherein the box body (300) is provided with a box body opening (320) in communication with the accommodating cavity (310); the loading mechanism further comprises:
a door panel (240) connected with the bracket (210) and used for opening or closing the box body opening (320); when the door panel (240) closes the box body opening (320), the bracket (210) and the tray component (220) are pushed into the box body (300); and when the door panel (240) opens the box body opening (320), the bracket (210) and the tray component (220) are pulled out from the box body (300).

18. The 3D printing and curing device as claimed in claim 3, wherein the light source mounting element (140) comprises a mounting part (410), the mounting part (410) is provided with a heat dissipation channel (420), a first opening (421), a second opening (422) and a third opening (423), the first opening (421), the second opening (422) and the third opening (423) are all in communication with the heat dissipation channel (420), and the first light source (120) or the second light source (130) is mounted at the third opening (423); the 3D printing and curing device further comprises:
a first heat dissipation element (430) arranged in the heat dissipation channel (420) and located between the first opening (421) and the second opening (422); and
a first heat dissipation fan (440) arranged at the first opening (421), or arranged in the heat dissipation channel (420) and located between the first opening (421) and the first heat dissipation element (430).

19. The 3D printing and curing device as claimed in claim 18, wherein the 3D printing and curing device further comprises:
a heat dissipation cover body (450) mounted at the second opening (422); and
the heat dissipation cover body (450) is provided with at least one vent hole (451).

20. The 3D printing and curing device as claimed in claim 18, wherein the first heat dissipation element (430) comprises a heat dissipation plate (431) and a plurality of heat dissipation fins (432) connected with the heat dissipation plate (431), the heat dissipation plate (431) has a first heat dissipation end surface and a second heat dissipation end surface arranged opposite to each other, the first heat dissipation end surface is arranged opposite to the first light source (120) or the second light source (130), and the plurality of heat dissipation fins (432) are arranged on the second heat dissipation end surface at intervals.

21. The 3D printing and curing device as claimed in any one of claims 1 to 7, wherein the 3D printing and curing device further comprises:
a second heat dissipation fan (460) arranged on the box body (300), the accommodating cavity (310) being in communication with an external environment through the second heat dissipation fan (460).

22. The 3D printing and curing device as claimed in any one of claims 1 to 7, wherein the box body (300) comprises a shell (350) and an inner cavity (360) arranged in the shell (350), and the inner cavity (360) has the accommodating cavity (310); and the 3D printing and curing device further comprises:
a heat insulation layer (370) arranged between the shell (350) and the inner cavity (360).
